(19) Europäisches Patentamt
European Patent Office
Office européen des brevets

(11) Publication number: **0 005 363**
**A1**

(12) # EUROPEAN PATENT APPLICATION

(21) Application number: **79300751.9**

(22) Date of filing: **02.05.79**

(51) Int. Cl.[2]: **C 08 F 8/44**, C 08 F 220/02, C 08 F 222/00

(30) Priority: **03.05.78 US 902325**

(43) Date of publication of application: **14.11.79 Bulletin 79/23**

(84) Designated Contracting States: **BE CH DE FR GB IT NL SE**

(71) Applicant: **The B.F. GOODRICH Company, Dept. 0015 WHB-6 500 South Main Street, Akron, Ohio 44318 (US)**

(72) Inventor: **Westerman, Ira John, 18552 Royalton Road, Strongville Ohio 44136 (US)**
Inventor: **Janda, Dennis Joseph, 3177 Coventry Drive, Parma Ohio 44134 (US)**

(74) Representative: **Gore, Peter Manson et al, W.P. THOMPSON & CO. Coopers Building Church Street, Liverpool L1 3AB (GB)**

(54) **Process for the preparation of carboxyl-containing polymers in an anionic form in the dry state; interpolymers thus obtained.**

(57) Carboxyl containing polymers in the neutralized ionic form, of acrylic, methacrylic or maleic acid anhydrides, usually copolymerized with esters, amides or nitriles, and optionally with cross-linking agents, are polymerized in non-aqueous systems in solvents for the monomers which are non-solvents for the resulting copolymers and the acid containing hydrophilic polymers thus obtained are neutralized to form an ionic salt, as with an alkali base such as NaOH dissolved or suspended in aliphatic alcohols containing less than 5 carbon atoms. By this technique the neutralization is conducted in the polymerization medium without isolating the free acid copolymers and a resulting slurry of uniform fine powder particles which are readily separated is obtained.

EP 0 005 363 A1

TITLE MODIFIED

see front page



## DESCRIPTION

## "IMPROVED METHOD FOR PROVIDING CARBOXYL CONTAINING POLYMERS IN AN IONIC FORM IN A DRY STATE."

Carboxyl containing polymers containing substantial quantities of carboxyl groups find utility in many applications. Such materials are described for example in U.S. Patent 2,798,053 directed to carboxylic polymers such as acrylic acid, maleic acid, the anhydrides, and the like, and copolymers with cross-linking agents of polyalkenyl polyether of polyhydric alcohols containing more than one acrylic ester grouping per molecule and the alcohol containing at least 4 carbon atoms and at least 3 hydroxyl groups. Such magerials are insoluble in water and organic solvents and in the form of their salts absorb large quantities of water or solvents. Additional carboxyl type comonomers may be included in such copolymers including for example, methylacrylate, hexylacrylate,and the like. Another useful class of carboxyl containing copolymers are those wherein the carboxylic acid monomers are copolymerized with acrylic esters containing 10 to 30 carbon atoms, which in the salt form are efficient water thickeners. These materials are described in U.S. Patent 3,940,351. Another related and improved class of such carboxyl containing copolymers are those that contain in addition to the carboxylic acid, a mixture of acrylic or methacrylic esters wherein one of the esters has alkyl groups containing 10 to 30 carbon atoms and in the other the alkyl group contains 1 to 8 carbon atoms, optionally with a cross-linking agent. These materials are found to rapidly absorb and retain large quantities of water and ionic fluids. These materials are described in U.S. Patent 4,062,817.

Other carboxylic polymers and copolymers such as those of acrylic acid, maleic acid, or the anhydrides also may be cross-linked to provide useful materials with divinyl benzene, unsaturated diesters and the like and these are disclosed in U.S. Patents 2,340,110; 2,340,111 and 2,533,635. These and similar related carboxyl containing polymers in many applications must be in the neutralized ionic form in order to function effectively. This is particularly so of

the acrylic acid, methacrylic acid, maleic acid and anhydride thereof copolymers containing long chain alkyl acrylates copolymerized therewith optionally with cross-linking monomers. The water thickening properties of most of these carboxyl containing polymers preclude neutralization to the neutralized ionic form with aqueous bases, although neutralization schemes have been suggested using ammonia or organic amines. The resulting products often have heat stability problems and therefore an improved method for preparing carboxyl containing polymers in neutralized ionic form is desired.

Carboxyl containing polymers in neutralized ionic form are obtained by neutralizing carboxyl containing polymers in a nonaqueous slurry with an alkali base dissolved or suspended in a lower alcohol. The polymers include acrylic, methacrylic, or maleic acid or anhydride polymers, if in the form of copolymers, present in the amount of greater than 40 weight percent of acid, preferably copolymerized with alkyl acrylates containing 1 to 30 carbon atoms, optionally with mixtures of short and long chain alkyl acrylic esters, amides or nitriles and also optionally with cross-linking agents. The carboxyl polymer slurry is normally obtained by polymerizing the copolymers in a solvent for the monomers which is substantially a nonsolvent for the resulting copolymers and neutralizing with a base in a lower alcohol. Also, the polymer may be isolated from the polymerization medium and redispersed in nonsolvent and reacted with the base.

The improved process of the invention is particularly applicable where it is desirable and/or necessary to obtain a dry or water-free acid containing polymer in ionic form where isolation of such material from aqueous solutions would be difficult, extremely expensive, or impossible. Such materials normally will be high molecular weight polymers which form viscous masses on contact with water and will normally have weight average molecular weights from about 10,000 to greater than 1,000,000. The molecular weights of cross-linking polymers may appear to be higher.

The carboxylic monomers useful in the production of the polymers of this invention are the olefinically-unsaturated carboxylic acids containing at least one activated carbon-to-carbon olefinic double bond, and at least one carboxyl group, that is, an acid containing an olefinic double bond which readily functions in polymerization because of its presence in the monomer molecule either in the alpha-beta position with respect to a carboxyl group thusly, $-\overset{|}{C}=\overset{|}{C}-COOH$, or as a part of a terminal methylene grouping thusly, $CH_2=C<$ present in the copolymer in amounts from about 40 to 87 weight percent of the copolymer. In the alpha-beta acids the close proximity of the strongly polar carboxyl groups to the double-bonded carbon atoms has a strong activating influence rendering the substances containing this structure very readily polymerizable. The presence of a terminal methylene grouping in a carboxylic monomer makes this type of compound much more easily polymerizable than if the double bond were intermediate in the carbon structure. Olefinically-unsaturated acids of this class include such widely divergent materials as the acrylic acids typified by acrylic acid itself, methacrylic acid, ethacrylic acid, alpha-chloroacrylic acid, alpha-cyano acrylic acid, beta methyl-acrylic acid (crotonic acid), alpha-phenyl acrylic acid, beta-acryloxy propionic acid, sorbic acid, alpha-chloro sorbic acid, angelic acid, cinnamic acid, p-chloro cinnamic acid, beta-styryl acrylic acid (1-carboxy-4-phenyl butadiene-1,3), itaconic acid, citraconic acid, mesaconic acid, glutaconic acid, aconitic acid, maleic acid, fumaric acid, and tricarboxy ethylene. As used herein, the term "carboxylic acid" includes the polycarboxylic acids and those acid anhydrides, such as maleic anhydride, wherein the anhydride group is formed by the elimination of one molecule of water from two carboxyl groups located on the same polycarboxylic acid molecule. Maleic anhydride and the other acid anhydrides useful herein have the general structure

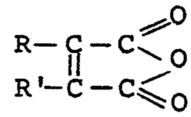

wherein R and R' are selected from the group consisting of hydrogen, halogen and cyanogen (-C≡N) groups and alkyl, aryl, alkaryl, aralkyl, and cycloalkyl groups such as methyl, ethyl, propyl, octyl, decyl, phenyl, tolyl, xylyl, benzyl, cyclohexyl and the like.

The preferred carboxylic monomers for use in this invention used in amounts of 40 to 87 weight percent total of the monomers polymerized are the monoolefinic acrylic acids having the general structure

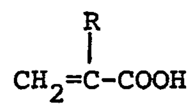

wherein R is a substitutent selected from the class consisting of hydrogen, halogen, and the cyanogen (-C≡N) groups, monovalent alkyl radicals, monovalent aryl radicals, monovalent aralkyl radicals, monovalent alkaryl radicals and monovalent cycloaliphatic radicals. Of this class, acrylic and methacrylic acid are most preferred because of generally lower cost, ready availability, and ability to form superior polymers. Another useful carboxylic monomer is maleic anhydride or the acid.

The acrylic ester monomers having long chain aliphatic groups are derivatives of an acrylic acid represented by the formula

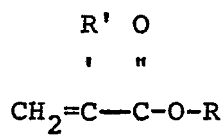

wherein R is an alkyl group having from 10 to 30 carbon atoms, preferably 10 to 20 carbon atoms and R' is hydrogen or a methyl or ethyl group present in the copolymer in amount from about 2 to 20 weight percent, more preferably, about 5 to 15 weight percent. Representative higher alkyl acrylic esters are decyl acrylate, isodecyl methacrylate, lauryl acrylate, stearyl acrylate, behenyl acrylate and

melissyl acrylate and the corresponding methacrylates. Mixtures of two or three or more long chain acrylic esters may be successfully polymerized with one of the carboxylic monomers to provide useful thickening resins of this invention. Particularly useful are those methacrylates where the alkyl group contains 12 to 21 carbon atoms present in amounts of about 5 to 15 weight percent of the total monomers. Outstanding polymers have been made with $15\pm5$ weight percent isodecylmethacrylate, $10\pm3$ weight percent lauryl methacrylate, $7\pm3$ weight percent stearyl methacrylate.

The other useful acrylic esters normally used with the long chain acrylic ester are also derivatives of an acrylic acid used in amounts of about 5 to 30 weight percent represented by the formula:

$$CH_2{=}\overset{R'}{\overset{|}{C}}-\overset{O}{\overset{\|}{C}}-O-R$$

wherein R is an alkyl, alkoxy, haloalkyl, cyanoalkyl, and like groups having from 1 to 9 carbon atoms and R' is hydrogen or a methyl or ethyl group. These acrylic esters are present in the copolymer in amount from about 5 to 30 weight percent and more preferably from about 5 to 25 weight percent. Representative acrylates include methyl acrylate, ethyl acrylate, propyl acrylate, isopropyl acrylate, butyl acrylate, isobutyl acrylate, methyl methacrylate, methyl ethacrylate, ethyl methacrylate octyl acrylate, heptyl acrylate, octyl methacrylate, isopropyl methacrylate, 2-ethylhexyl acrylate, nonyl acrylate, hexyl acrylate, n-hexyl methacrylate, and the like.

Acrylic nitriles, α-β-olefinically unsaturated nitriles useful in the interpolymers embodied herein may be used instead of or along with the short chain acrylic esters, are preferably the monoolefinically unsaturated nitriles having from 3 to 10 carbon atoms such as acrylonitrile, methacrylonitrile, ethacrylonitrile, chloroacrylonitrile, and the like. Most preferred are acrylonitrile and

methacrylonitrile. The amounts used are from about 5 to 30 weight percent of the total monomers copolymerized.

Acrylic amides also may be used as the nitriles are and include monoolefinically unsaturated amides which may be incorporated in the interpolymers of this invention having at least one hydrogen on the amide nitrogen and the olefinic unsaturation is α-β to the carbonyl group. The preferred amides have the structure

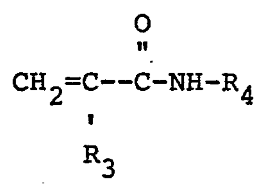

Wherein $R_3$ is a member of the group consisting of hydrogen and an alkyl group having from 1 to 4 carbon atoms and $R_4$ is a member of the group consisting of hydrogen and an alkyl group having from 1 to 6 carbon atoms. Representative amides include acrylamide, methacrylamide, N-methyl acrylamide, N-t-butyl acrylamide, N-cyclohexyl acrylamide, N-ethyl acrylamide and others. Very much preferred are acrylamide and methacrylamide used in amounts from about 5 to 30 weight percent of the total monomers copolymerized.

Other acrylic amides include N-alkylol amides of α,β-olefinically unsaturated carboxylic acids including those having from 4 to 10 carbon atoms such as N-methylol acrylamide, N-ethanol acrylamide, N-propanol acrylamide, N-methylol methacrylamide, N-ethanol methacrylamide, N-methylol maleimide, N-methylol maleamide, N-methylol maleamic acid, N-methylol maleamic acid esters, the N-alkylol amides of the vinyl aromatic acids such as N-methylol-p-vinyl benzamide, and the like and others. The preferred monomers of the N-alkylol amide type are the N-alkylol amides of α,β-monoolefinically unsaturated monocarboxylic acids and the most preferred are N-methylol acrylamide and N-methylol methacrylamide used in amounts of about 5 to 20 weight percent.

N-alkoxymethyl acrylamides also may be used having the structure

$$
\begin{array}{l}
\quad\quad\; O \;\; H \\
\quad\quad\; \| \;\;\; | \\
CH_2{=}\underset{\underset{R_5}{|}}{C}{-}C{-}N{-}CH_2{-}O{-}R_6
\end{array}
$$

wherein $R_5$ is selected from the group consisting of hydrogen and methyl, and $R_6$ is an alkyl group having from 1 to 8 carbon atoms. It is thus intended that where references are made herein regarding the essential N-substituted alkoxymethyl amides, the term "acrylamide" includes "methacrylamide" within its meaning. The preferred alkoxymethyl acrylamides are those wherein R is an alkyl group containing from 2 to 5 carbon atoms and useful is N-butoxymethyl acrylamide. The carboxyl containing copolymers may be crosslinked in several ways. One is to use as comonomers polyalkenyl polyethers that contain more than one alkenyl ether grouping per molecule and those most useful possess alkenyl groups in which an olefinic double bond is present attached to a terminal methylene grouping thusly $CH_2{=}C{<}$. They are made by the etherification of a polyhydric alcohol containing at least 4 carbon atoms and at least 3 hydroxyl groups. Compounds of this class are readily produced, for example, by a Williamson-type synthesis, in which an alkenyl halide, or a mixture of such halides, such as allyl chloride, allyl bromide, methallyl chloride, methallyl bromide and others, is reacted with a strongly alkaline aqueous solution of one or more of the polyhydric alcohols. The product of such a synthesis usually is a complex mixture of polyethers containing varying numbers of ether groups on each molecule. Analysis of such materials, therefore, reveals only the average number of ether groupings on each molecule. These mixtures, however, if they analyze as containing an average number of ether groups per molecule greater than one, are capable of producing the insoluble carboxylic polymers of this invention. Since the efficiency of the polyether cross-linking agent increases with the number of potentially polymerizable groups on the molecule, it is much preferred to utilize polyethers containing an average of two or more

alkenyl ether groupings per molecule. The polyvinyl polyethers of the polyhydric alcohols within the above broad class are produced by reacting acetylene with the polyhydric alcohol (or an alcoholate thereof) in a Reppe-type vinylation synthesis. The polycrotyl ethers of the polyhydric alcohols also are useful although they do not contain a terminal $CH_2=C<$ grouping.

Illustrative polyhydric alcohols of the above-described class that may be utilized in the preparation of the polyalkenyl polyether cross-linking agent include the butane triols such as 1,2,3-butane triol, 2,3,4-trihydroxy butyric acid, the aldotetroses such as erythrose and threose, ketotetroses such as erythrulose; the aldopentoses such as arabinose, xylose, lyxose, and ribose; ketopentoses such as araboketose and xyloketose; aldohexoses such as glucose, galactose, mannose, gluose, idose, talose, allose and the like; ketohexoses such as fructose or levulose, sorbose and the like; other sugars including the mono-, di-, tri- and polysaccharides such as sucrose, maltose, lactose and raffinose; the hexosans, pentosans and hexosan-pentosans, the galactomannan and glucomannan gums, starch and others; reduced forms of the above and other sugars and polysaccharides such as the so-called "sugar alcohols" erythritol, xylitol, mono-, di- and tri-pentaerythritol, arabitol, mannitol, iditol, tolitol, sorbitol, inositol, dulcitol, and others; the oxidized derivatives of the sugars in which the oxidation has not been carried to the point where the original monosaccharide carbon chain unit is broken such as the mono- and di-carboxylic "sugar acids" including gluconic acid, glucuronic acid, galactonic acid, galacturonic acids, saccharic acid, mucic and pectic acids and other polyhydric alcohols of the class described.

A preferred class of polyhydric alcohols for use in the production of the polyalkenyl polyether monomer are known as the oligosaccharides, which are defined as containing from one to four monosaccharide units. In addition to the oligosaccharides themselves, their reduction products

such as the alcohols, aldo-alcohols and their oxidation products which retain the original saccharide chain such as the sugar acids, the keto-acids, the aldo-acids and the like can be used. Illustrative saccharides of this class are the monosaccharides such as glucose, galactose, fructose, sorbose, rhamnose, and the like, disaccharides such as sucrose, arabinose, maltose, lactose, and the like, trisaccharides such as raffinose and others. Of these the disaccharide, sucrose, is much preferred because of its ready availability and its ability to produce polyethers of great reactivity with carboxylic monomers.

The preferred cross-linking monomer for use in preparing the copolymers, if one is employed, is a polyalkenyl polyether having more than one alkenyl ether grouping per molecule. The most useful possess alkenyl groups in which an olefinic double bond is present attached to a terminal methylene grouping, $CH_2=C<$ . They are made by the etherification of a polyhydric alcohol containing at least 4 carbon atoms and at least 3 hydroxyl groups. It is preferred to utilize polyethers containing an average of two or more alkenyl ether groupings per molecule. Other cross-linking monomers include for example, diallyl esters, dimethallyl ethers, allyl or methallyl acrylates and acrylamides, tetraallyl tin, tetravinyl silane, polyalkenyl methanes, diacrylates and dimethacrylates, divinyl compounds as divinyl benzene, polyallyl phosphate, diallyloxy compounds and phosphite esters and the like. Typical agents are allyl pentaerythritol, allyl sucrose, trimethylolpropane triacrylate 1,6-hexanediol diacrylate, pentaerythritol triacrylate, tetramethylene dimethacrylate, tetramethylene diacrylate, ethylene diacrylate, ethylene dimethacrylate, triethylene glycol dimethacrylate, and the like. Allyl pentaerythritol and allyl sucrose provide excellent polymers in amounts less than 0.5 weight percent. Cross-linking of the polymers provides improved ability for the copolymers to swell under a confining pressure.

When the optional cross-linking agent is present, polymeric mixtures containing about 0 to about 3% by weight

of cross-linking monomer based on the total of carboxylic acid monomer plus the alkyl acrylate ester monomers, and more preferably, 0.01 to 0.5 to 1.0 weight percent or phm.

Other cross-linking agents such as divinyl benzene; unsaturated diesters such as diallyl maleate or ethylene glycol dimethacrylate; diallyl or divinyl ethers and others such as are disclosed in U.S. patents 2,340,110; 2,340,111; and 2,533,635 may be used.

Another method to obtain the desired cross-linking is to use a comonomer which can react to yield cross-links during polymerization. Examples are 2-hydroxyethyl methacrylate and hydroxypropyl methacrylate, and the like. These units, when copolymerized, cross-link by interchain esterification with carboxylic groups. For 2-hydroxyethyl methacrylate, about 1 to 7 weight percent of monomers based on the total weight of monomers will provide a desired degree of cross-linking.

Another method of obtaining cross-linked polymers is by reacting small amounts of a polyvalent base with the carboxyl-containing polymer. Those materials which yield multivalent cations, for example, include calcium, magnesium, zinc, and aluminum. A mixed salt to be used would be one containing potassium or sodium ions with small amounts of calcium or aluminum ions, for example, to provide the multivalent cation to provide cross-linking through polymeric carboxyl groups.

It will also be understood that small amounts of other vinylidene monomers, that is those copolymerizable monomers containing at least one terminal $CH_2=C<$ group may also be included as a copolymerizable monomer with the essential monomers so long as such monomers do not adversely affect the desired balance of water absorption and retention of the polymeric materials. Such materials include vinyl acetate, styrene, vinyl pyrrolidone, methyl vinyl ether, ethyl vinyl ether, methyl vinyl ketone and the like in amounts less than about 10 weight percent of the polymer, normally less than 5 weight percent. While these polymers

may be made in mass they normally will be prepared in liquid carriers normally organic solvents which do not dissolve or excessively swell the polymer to any appreciable extent. Good solubility of the monomers in such solvents or mixtures thereof is an advantage. Extremely polar solvents such as dimethyl formamide and dimethylsulfoxide have not been found to be preferred. Likewise, solvents which might participate in hydrogen bonding with the polymer such as tetrahydrofuran are not preferred. The most useful solvents have been found to be aromatic hydrocarbons such as benzene, toluene and the xylenes; aliphatic hydrocarbons preferably having boiling points about room temperature, such as hexane, heptane, and the like; esters such as ethyl acetate; chlorine or halogen containing hydrocarbons and the like. The solvent preferably is less polar than acetone and is nonhydrogen bonding.

The polymers of this invention are preferably made by polymerization in an inert diluent having some solubilizing action on one or more of the monomeric ingredients but substantially none on the resultant polymer. Polymerization in an organic liquid which is a solvent for the monomers but a nonsolvent for the polymer, or in a mixture of such solvents, in the presence of a solvent-soluble catalyst is most preferred because the product is usually obtained as a very fine friable and often fluffy precipitate which, after solvent removal, seldom requires grinding or other treatment before use. Suitable solvents for the latter method include benzene, xylene, tetralin, hexane, heptane, carbon tetrachloride, methylene chloride, ethyl chloride, bromo trichloromethane, dimethyl carbonate, diethyl carbonate, ethylene dichloride, and mixtures of these and other solvents.

The polymerizations conducted in the presence of a haloethane or halomethane, preferably containing at least four halogen atoms, are readily conducted. Representative materials include for example, chlorofluoromethane, bromofluoroethane, or preferably a chlorofluoroethane or chlorofluoromethane containing at least four halogen atoms including, for example, 1,1,2-trichloro-1,2,2-trifluoroethane,

trichlorofluoromethane, 1-chloro-1,1,2,2,2-pentafluoroethane, dichlorodifluoromethane, 1,2-difluoro-1,1,2,2-tetrachloroethane and the like. The amounts of these materials used may be varied from the amount just sufficient to make a slurry of the reactants up to where there is a substantial excess of the chlorofluoroethane, as will be apparent to those skilled in the art. Preferred diluents are those which are solvents for the monomers but nonsolvents for the polymers.

Polymerization in the diluent medium is carried out in the presence of a free radical catalyst in a closed vessel in an inert atmosphere and under autogenous pressure or artificially-induced pressure or in an open vessel under reflux at atmospheric pressure. Temperature of the polymerization may be varied from 0°C to 100°C, depending to a large degree on the molecular weight desired in the polymer. Polymerization under reflux at 50° to 90°C under atmospheric pressure using a free radical catalyst is generally effective in bringing a polymer yield of 75% to 100% in less than 10 hours. Suitable catalysts include peroxygen compounds such as sodium, potassium and ammonium persulfates, caprylyl peroxide, benzoyl peroxide, hydrogen peroxide, pelargonyl peroxide, cumene hydroperoxides, tertiary butyl diperphthalate, tertiary butyl perbenzoate, sodium peracetate, sodium percarbonate, and the like as well as azodiisobutyryl nitrile, hereinafter referred to as azoisobutyronitrile. Other catalysts utilizable are the so-called "redox" type of catalyst and the heavy-metal activated catalyst systems.

The basic materials normally used to make the ionic form of the carboxyl containing polymers normally in salt form normally have at least some solubility in lower alkanols containing 1 to 5 carbon atoms such as methanol, ethanol, propanol and tertiary butanol optionally in combination with simple glycols such as ethane diol, propane diol and the like.

Particularly useful basic materials, for example, are sodium hydroxide, which is soluble to the extent of 1

gram in 4.2 grams of methanol and 1 gram in 7.2 grams of ethanol, and potassium hydroxide which has a solubility for example, of 1.0 grams in 3.0 grams of ethanol. Other typical basic materials include sodium methoxide in methanol, for example, sodium ethoxide in ethanol, for example, sodium isopropoxide in isopropanol, potassium methoxide in methanol, potassium ethoxide in ethanol, potassium tert-butoxide in tert-butanol. Other useful ionic forming materials include ammonium or potassium acetate, lithium acetate, aluminum isopropoxide and the like.

Particularly useful alkali metal hydroxides and alkoxides, including preferably sodium hydroxide in methanol, potassium hydroxide in ethanol and sodium ethoxide in ethanol. The basic material used preferably has solubility in the alcohol solvent of greater than 0.1 grams per ml of alcohol.

At least 30% of the acid, carboxyl, groups are neutralized to an ionic state, that is, $-CO_2M^+$. Preferably, about 50 to 90 weight percent of the acid groups are neutralized to $-CO_2M$.

As water absorbent materials these polymers find many uses in powder, lump, film, fiber, fabric form and like form. They are of particular utility in the disposable nonwoven industry where there is need for polymers which will absorb and retain water and ionic physiological fluids. An important feature of these polymers is their enhanced thickening property even in the presence of a salt. Specific applications include disposable diapers, medical-surgical supplies and personal care products. Such applications require a polymer which must imbibe the liquid to be absorbed rapidly and be a polymer that will not dissolve. Further, the fluid must be immobilized or congealed in some way to be retained. The materials may also be used as suitable additives to greatly increase the absorptive power of conventional absorbents such as cotton, wood pulp and other cellulosic absorbents used in applications such as wiping cloths, surgical sponges, catamenial devices, and the like. In a

specific application, for example, a disposable diaper, there is an inner layer of a soft absorbent nonwoven material that absorbs and passes urine to an inner layer of fluffy fibrous absorbent materials, wherein during the construction of this nonwoven fiber agglomerates or fibers of the polymers of this invention may be included and an additional impervious plastic layer, as polyethylene. A film of the copolymers of this invention may be used between the outer plastic layer and the inner fluffy absorbent layer. Use of the polymers of this invention can result in reduction in the bulk size of many disposable nonwovens.

EXAMPLE I

A carboxyl polymer of seven (7) weight parts lauryl methacrylate, 10 weight parts methyl methacrylate, 83 weight parts of acrylic acid and 0.05 weight part of allyl pentaerythritol were copolymerized in 1,1,2-trichloro-1,2,2-trifluoroethane to provide a copolymer slurry of 191.3 grams of copolymer and 980 milliliters of 1,1,2-trichloro-1,2,2-trifluoroethane. A solution of 109.1 grams of KOH in 550 milliliters of absolute ethanol was added with stirring over a twenty minute period to the slurry. The resulting neutralized polymer was filtered and vacuum dried for 22 hours at 60°C. It was neutralized to a pH of 7.0. The yield was 276.2 grams.

EXAMPLE II

98.7 weight parts of acrylic acid and 1.3 weight parts of allyl pentaerythritol were copolymerized as described in Example I in 1,1,2-trichloro-1,2,2-trifluoroethane to a slurry containing 6.9 weight percent total solids (84.9 grams) and was added thereto a solution of 42.3 grams of KOH and 210 milliliters of absolute ethanol. The resulting neutralized polymer powder was filtered and vacuum dried. It was neutralized to a pH of 6.35. The yield was 107.2 grams.

EXAMPLE III

A copolymer of 10 weight parts lauryl methacrylate and 90 weight parts acrylic acid was prepared as described

in Example I. A solution of 56 grams of NaOH and 500 milliliters of methanol was added over a thirty-five (35) minute period to a 10% slurry of the copolymer in 1,1,2-trichlorol,2,2-trifluoroethane. The powdered product neutralized to a pH of 6.95 was filtered and vacuum dried. The yield was 185.8 grams.

EXAMPLE IV

To a 15% total solid slurry of 125 grams of copolymer of 30 weight parts lauryl methacrylate and 70 weight parts acrylic acid and 450 ml of 1,1,2-trichloro-1,2,2-trifluoroethane there was added a solution of 60 grams of KOH and 300 milliliters of ethanol over a 20 minute period. The resulting neutralized fine powder had a pH of 7.95, was filtered and vacuum dried. The yield was 157.1 grams.

In the following examples the test to determine water absorption is referred to as the DWT test (B. M. Lichstein, "Demand-Wettability, a New Method for Measuring Absorbency Characteristics of Fabrics," Symposium Papers, INDA Technical Symposium, 1974, pp. 129-142.

EXAMPLE V

A copolymer containing 83 weight percent acrylic acid, 10 weight percent methyl methacrylate and 7 weight percent lauryl methacrylate polymers in heptane was neutralized with a solution of KOH in ethanol. A solution of 57.0 gm of technical grade KOH in 285 ml of ethanol was added over a 20 minute period to a slurry of 100 gm of polymer in 450 gm of heptane. The suspension was then stirred an additional 45 minutes. The neutralized polymer was filtered and vacuum dried. The dried polymer weighed 140.5 gm (q + 5.7%) and was nuetralized to a pH of 7.0. This neutralized polymer absorbed 29 ml/gm of simulated urine at 0.15 psi in the Demand Wettability Test (DWT).

EXAMPLE VI

The polymer of Example V was polymerized in ethyl acetate in accordance with procedures set forth before. A solution of 57.0 gm of technical grade KOH in 285 ml of

ethanol was added over a 20 minute period to a slurry of 100 gm of polymer in 450 gm of ethyl acetate. The suspension was then stirred for an additional 45 minutes. The neutralized polymer was filtered and vacuum dried. The dried polymer weighed 137.8 gm (q + 3.7%) and was neutralized to a pH of 6.7. This neutralized sample absorbed 25 ml/gm of simulated urine at 0.15 psi in the DWT.

EXAMPLE VII

The polymer of Example V was polymerized in benzene and neutralized with KOH dissolved in ethanol. A solution of 57.0 gm of technical grade KOH in 285 ml of ethanol was added over a 20 minute period to a slurry of 100 gm of polymer in 450 gm of benzene. The suspension was then stirred an additional 45 minutes. The neutralized polymer was filtered and vacuum dried. The dried polymer weighed 134.0 gm (q + 0.8%) and was neutralized to a pH of 7.1. This sample absorbed 36$\pm$5 ml/gm of simulated urine in the DWT.

EXAMPLE VIII

The copolymer was prepared from 83 weight percent acrylic acid, 10 weight percent methyl methacrylate and 7 weight percent lauryl methacrylate in 1,1,2-trichloro-1,2,2-trifluoroethane with 0.3 phm lauroyl peroxide catalyst. The resulting suspended polymer was isolated from the carrier and dried. A solution of 64 gm of technical grade KOH in 320 ml of absolute ethanol was added over a 20 minute period to a slurry of 100 gm of polymer in 567 gm of heptane. The suspension was then stirred an additional 45 minutes. The resultant ionic polymer was filtered and vacuum dried. The dried polymer weighed 145.4 gm (q + 6.2%) and was nuetralized to a pH of 7.45. This sample absorbed 35$\pm$5 ml/gm of simulated urine in the DWT at 0.15 psi.

EXAMPLE IX

A copolymer prepared in accordance with the procedure of Example VIII in the same solvent containing 83 weight percent acrylic acid, 10 weight percent methyl methacrylate, 7 weight percent lauryl methacrylate and 0.6

weight parts per 100 of total monomers of allyl pentaerythritol was prepared. A solution of 137 gm of technical grade KOH in 680 ml of ethanol (0.2 g/ml) was added over a 20 minute period to a slurry of 240 gm of polymer in 1760 gm of Freon-113 (1,1,2-trichloro-1,2,2-trifluoroethane). The suspension was stirred an additional 30 minutes. The polymer was filtered and vacuum dried. The dried polymer weighed 342.8 gm (q +3.2%) and was neutralized to a pH of 6.95. This sample absorbed 72 ml/gm of distilled water at 1.0 psi and 55 ml/gm at 1.5 psi in the DWT. In the flood-centrifuge test this sample absorbed 430 ml/gm at 1,000 x G. The Flood-Centrifuge Test is described in Lepoutre, P., Hue, S.H. and Robertson, A.A., "The Water Absorbency of Hydrolyzed Polyacrylonitrile Grafted Pulp", J. Appl. Polym. Sci., 17, 3143 (1973).

Other examples of polymers that are prepared in a solvent, non-solvent for the polymer and then neutralized include:

1) Copolymerizing 86.8 weight parts acrylic acid, 15 weight parts of polyallyl sucrose with 0.5 weight parts of caprylyl peroxide in 1000 weight parts heptane.

2) 99 weight parts acrylic acid, 1 weight part polyallyl surcrose with 0.5 weight parts azoisobutyronitrile in 880 weight parts of benzene.

3) 75 weight parts acrylic acid, 25 weight parts vinyl acetate, 1.5 weight parts polyallyl sucrose, 0.75 weight parts azoisobutyrnitrile in 500 weight parts of benzene.

4) 90 weight parts acrylic acid, 10 weight parts of N-methyl acrylamide or 10 weight parts vinyl ethyl ether, 1 weight part polyallyl sucrose, with 1 weight part benzoyl peroxide in 880 weight parts of benzene.

5) 50 weight parts maleic anhydride, 50 weight parts vinyl n-butyl ethyl, 2 weight parts benzoyl peroxide in 880 weight parts benzene.

6) 91.7 weight parts acrylic acid, 8.3 weight parts stearyl acrylate, with caprylyl peroxide in benzene.

7) 9.5 weight parts acrylic acid, 5 weight parts hexodecyl acrylate polymerized with caprylyl peroxide in benzene.

8) 62.5 weight parts acrylic acid, 12 weight parts methyl methacrylate, 5 weight parts lauryl methacrylate, with caprylyl peroxide in 675 weight parts of 1,1,2-trichloro-1,2,2-trifluoro ethane.

9) 78 weight parts acrylic acid, 15 weight parts ethyl acrylate, 7 weight parts lauryl methacrylate or 7 weight parts isodecyl methacrylate and 0.2 weight parts allyl pentaerythritol with caprylyl peroxide in 1,1,2-trichloro-1,2,2-trifluoroethane.

## CLAIMS.

1. A process for the preparation of particulate carboxyl containing polymers in ionic form characterised by neutralizing said carboxyl containing polymer in a non-aqueous slurry with a base dissolved or suspended in a lower alcohol.

2. A process as claimed in claim 1 wherein said carboxyl containing polymer contains greater than about 40 weight percent olefinically unsaturated carboxylic acid containing at least one activated carbon-to-carbon olefinic double bond and at least one carboxylic group copolymerized with from (1) 0 to 30 weight percent of an acrylic ester having the formula

$$\begin{array}{ccc} & R' & O \\ & | & \| \\ CH_2= & C & —C-O-R \end{array}$$

wherein R is an alkyl group containing 10 to 30 carbon atoms, (2) from 0 to 30 weight percent of another acrylic ester, nitrile or amide, said ester containing an alkyl group of 1 to 9 carbon atoms, and (3) a cross linking agent, dispersed in an organic liquid that is less polar than acetone and is non-hydrogen bonding, said basic material being an alkali dissolved or suspended in an hydroxyl compound containing one to five carbon atoms.

3. A process as claimed in claim 2 wherein said carboxylic acid is selected from acrylic acid, methacrylic acid and maleic acid or anhydrides thereof, said acrylic ester (1) contains an R group of 10 to 20 carbon atoms and R' is hydrogen or methyl, present in said copolymer in amounts from about 2 to 20 weight percent, said other acrylic ester (2) wherein the alkyl group contains 1 to 6 carbon atoms, the amide is acrylamide or methacrylamide and the nitrile is acrylonitrile or methacrylonitrile and (3) from 0 to 3 weight percent of a polyfunctional unsaturated cross-linking monomer copolymerized therewith, the organic liquid being an

an aromatic hydrocarbon, aliphatic hydrocarbon ester or halogen containing hydrocarbon, and the alkali base being a sodium, potassium or lithium compound in an alcohol present in amount to react with at least 30 weight percent of the COOH group.

4. A process as claimed in claim 3 wherein said carboxylic acid is acrylic or methacrylic acid, said cross-linking agent is a polyalkenyl polyether containing more than one alkenyl ether group per molecule and an olefinic double bond is attached to a terminal methylene group $CH_2=C<$.

5. A process as claimed in claim 4 wherein said carboxylic acid is acrylic acid present in amounts greater than 50 weight percent, and said halogen containing liquid is a chlorofluoroalkane.

6. A process as claimed in claim 5 wherein said chlorofluoroalkane contains two carbon atoms and six halogen atoms.

7. A process as claimed in claim 6 wherein said acrylic ester (1) is present in amounts from 2 to 20 weight percent and is selected from isodecyl methacrylate, lauryl methacrylate, and stearyl methacrylate and said acrylic ester (2) is ethyl acrylate or methyl methacrylate, said alcohol is ethanol or methanol and said alkali is sodium hydroxide, potassium hydroxide or lithium hydroxide.

8. A process as claimed in claim 7 wherein (1) is present in amount from about 5 to 15 weight percent, and (2) is present in amount from about 15 to 25 weight percent, there being about 0.01 to 0.5 weight percent of allyl pentaerythritol or allyl sucrose.

9. A process as claimed in claim 8 wherein said organic liquid is 1,1,2-trichloro-1,2,2-trifluoroethane.

10. A process as claimed in claim 9 wherein (1) is stearyl methacrylate, (2) is methyl methacrylate and said cross-linking agent is allyl pentaerythritol in amount from 0.05 to 0.2 weight percent.

11. An interpolymer made by the process of claim 10 wherein (2) is hexyl methacrylate.

12. An interpolymer made by the process of claim 10 wherein (2) is octyl acrylate.

13. An interpolymer made by the process of claim 10 wherein (2) is 2-ethylhexyl methacrylate.

14. An interpolymer made by the process of claim 10 wherein (2) is isopropyl methacrylate.

15. An interpolymer made by the process of claim 10 wherein there is 10 to 20 weight percent of (1) isodecyl methacrylate and (2) is methyl methacrylate.

16. A process as claimed in claim 4 wherein said alkali base is an alkoxide.

17. A process for the preparation of particulate carboxyl containing polymers in ionic form comprising polymerizing a carboxyl containing monomer in an organic liquid in which said monomer is substantially soluble and in which the resulting polymer is substantially insoluble and neutralizing said carboxyl containing polymer with a base dissolved or suspended in a lower alkanol.

18. A process as claimed in claim 17 wherein said organic liquid is less polar than acetone and is non-hydrogen bonding, said carboxyl containing monomer is an olefinically unsaturated carboxylic acid containing at least one activated carbon-to-carbon olefinic double bond and at least one carboxylic group copolymerized with (1) from 0 to 30 weight percent of an acrylic ester having the formula:

R' O
| ||
$CH_2$=C—C-O-R

wherein R is an alkyl group containing 10 to 30 carbon atoms (2) 0 to 30 weight percent of another acrylic ester, nitrile or amide, said ester containing an alkyl group of 1 to 9 carbon atoms and a cross-linking agent, said basic material being an alkali dissolved or

suspended in a hydroxyl compound containing 1 to 5 carbon atoms and further comprising separating the resulting particulate neutralized ionic salt from said organic liquid.

19. A process as claimed in claim 18 wherein said organic liquid is an aromatic hydrocarbon, aliphatic hydrocarbon, an ester or a chlorine or a halogen containing hydrocarbon and there is present greater than 50 weight percent of the total monomer of a carboxylic acid selected from acrylic acid, methacrylic acid and maleic acid or anhydrides thereof, said acrylic ester (1) contains an R group of 10 to 20 carbon atoms and R' is hydrogen or methyl present in amounts from about 2 to 20 weight percent, in said other acrylic ester (2) the alkyl group contains 1 to 6 carbon atoms, the amide is acrylamide or methacrylamide and the nitrile is acrylonitrile or methacrylonitrile and (3) from 0 to 3 weight percent of a polyfunctional unsaturated cross-linking monomer are copolymerized therewith, and said alkali base is a sodium, potassium or lithium compound in an alcohol present in amount to react with at least 30 weight percent of the carboxyl groups.

20. A process as claimed in claim 19 wherein said carboxylic acid is acrylic or methacrylic acid, said cross-linking agent is a polyalkenyl polyether containing more than one alkenyl ether group per molecule and an olefinic double bond is attached to a terminal methylene group $CH_2=C<$.

21. A process as claimed in claim 20 wherein said carboxylic acid is acrylic acid present in amounts greater than 50 weight percent, said acrylic ester (2) is methyl methacrylate or an alkyl acrylate wherein the alkyl group contains 1 to 4 carbon atoms, said alkali base is a hydroxide dissolved in ethanol or methanol and said halogen containing liquid is a chlorofluro-alkane, the resulting neutralized polymers in final

BAD ORIGINAL

form substantially free of water being obtained by separation from the organic liquid used in the polymerization.

0005363

European Patent Office

# EUROPEAN SEARCH REPORT

Application number
EP 79 30 0751

## DOCUMENTS CONSIDERED TO BE RELEVANT

| Category | Citation of document with indication, where appropriate, of relevant passages | Relevant to claim |
|---|---|---|
| X | US - A - 4 027 082 (I. GAVRILOVA, S. HUDECEK)<br>* claims 1,2,6,7 * | 1-3, 17 |
| X | US - A - 3 030 342 (H.E. TIEFENTHAL, Y.C. LEE)<br>* claims 1,6 * | 1,3 |

CLASSIFICATION OF THE APPLICATION (Int. Cl.²)

C 08 F 8/44
C 08 F 220/02
C 08 F 222/00

TECHNICAL FIELDS SEARCHED (Int.Cl.²)

C 08 F 8/00
C 08 F 8/44
C 08 F 8/12

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 9-08-1979 | PEETERS |

EPO Form 1503.1 06.78